# EUROPEAN PATENT APPLICATION

(11) **EP 4 770 039 A1**
(43) Date of publication of application: **01.07.2026**
(21) Application number: 24812357.2
(22) Date of filing: 29.09.2024
(51) Int. Cl.: H04L 45/247, H04L 45/28, H04L 45/02, H04L 12/437, H04L 45/00

(54) **PACKET FORWARDING METHOD AND APPARATUS, AND ELECTRONIC DEVICE**

(71) Applicant: New H3C Technologies Co., Ltd., Binjiang District Hangzhou Zhejiang 310052 (CN)
(72) Inventor: YE, Jinrong, Beijing 100102 (CN); ZHAO, Haifeng, Beijing 100102 (CN); CHEN, Zichao, Beijing 100102 (CN); LI, Guang, Beijing 100102 (CN)
(74) Representative: 2SPL Patentanwälte PartG mbB
(86) International application number: PCT/CN2024/122546
(87) International publication number: WO 2026/065326

(57) **Abstract**

The present disclosure provides packet forwarding methods, apparatuses, and electronic devices. In this example, each node in the ring network enables a ring network protection function for a local ring network interface, so that when a node determines that an out-going interface of a route to a destination node is the local ring network interface enabled with the ring network protection function, the route is regarded as a primary route from the node to the destination node, and determines a backup route of the primary route (an out-going interface of the backup route is a ring network interface enabled with the ring network protection function at the node). Then the packet may be forwarded based on the primary and backup routes. For example, after receiving the packet, if an in-coming interface receiving the packet is the same as a primary out-going interface of the primary route, the packet may be forwarded directly through a backup out-going interface of the backup route. This avoids a packet forwarding loop caused by a node on the ring network receiving a packet before the route has successfully adjusted when anomalies occur on the ring network, such as a node failure or a link failure between any two nodes.

## Description

### TECHNICAL FIELD

The present disclosure relates to network communication technology and, in particular, to packet forwarding methods, apparatuses and electronic devices.

### BACKGROUND

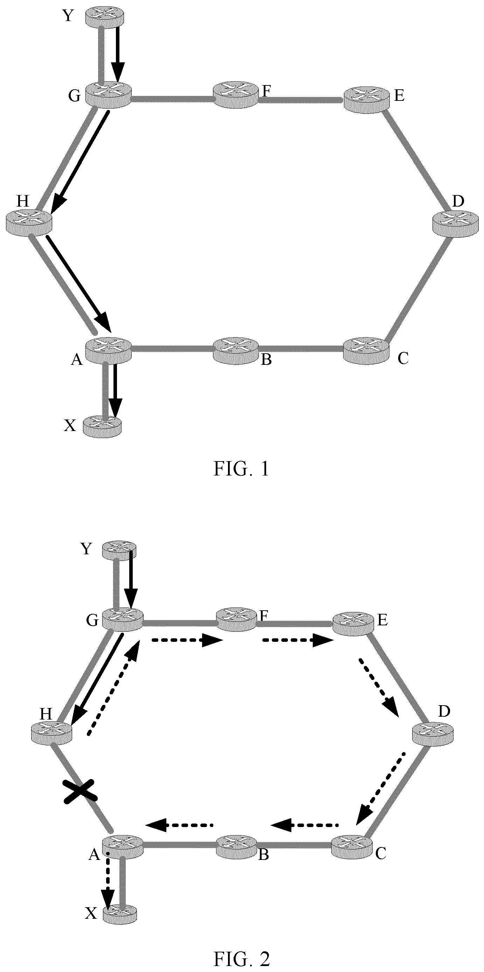

In a ring network, each node calculates an Internet Protocol (IP) route to a destination node based on a shortest path first algorithm. For example, in the ring network shown in FIG. 1, which consists of nodes A, B, C, D, E, F, G, and H, each node calculates an optimal route to node X using the shortest path first algorithm. In this manner, as shown in FIG. 1, a service packet entering the ring network from node G is forwarded to node X according to the following path: node G -> node H -> node A -> node X. A service packet of the ring network from node F is forwarded to node X according to the following path: node F -> node G -> node H -> node A -> node X.

If an abnormality occurs in the ring network, such as a node failure or a link failure between any two nodes, the nodes in the ring network will promptly adjust their original routes to avoid the failure upon detecting it. For example, if node A fails, after the service packet sent to node X enters the ring network from node G, node G forwards the service packet to node H, and node H finds that node A fails and modifies the original route to send the packet to node G. The principle from node G to node C is similar, and the final service packet is forwarded to node X according to the following path: node G-> node F-> node E-> node D -> node C -> node B -> node A-> node X. The details are shown in FIG. 2.

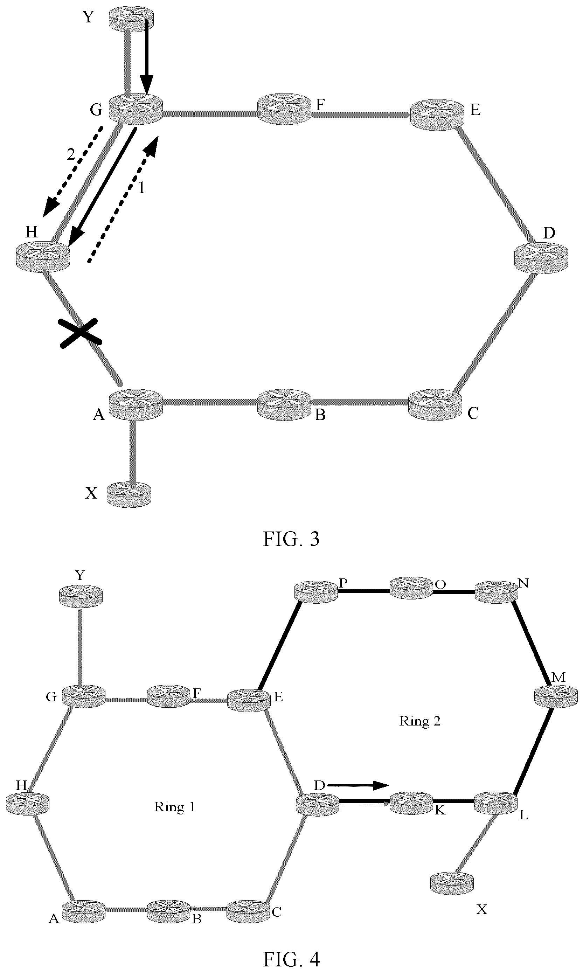

However, if the route has not converged when a node in the ring network receives a service packet, such as when node G receives a service packet returned from node H but its routing has not yet converged, node G will still forward the service packet to node H using the original route, i.e., an out-going interface is an interface on node G connecting to node H. This results in a forwarding loop between node G and node H when forwarding the service packet, as shown in FIG. 3.

### SUMMARY

The present disclosure provides packet forwarding methods, apparatuses and electronic devices, so as to avoid a packet forwarding loop.

An example of the present disclosure provides a packet forwarding method, which is performed by a node a ring network, the method including:
receiving a packet;
finding a forwarding table entry for forwarding the packet in a local forwarding table, where the forwarding table entry includes a primary out-going interface identifier and a backup out-going interface identifier, the primary out-going interface identifier indicates a first ring network interface at the node, the backup out-going interface identifier indicates a second ring network interface at the node, the first ring network interface and the second ring network interface both are enabled with ring network protection function , and the first ring network interface is different from the second ring network interface; and
forwarding, in response to determining that an in-coming interface receiving the packet is the first ring network interface indicated by the primary out-going interface identifier, the packet through the second ring network interface indicated by the backup out-going interface identifier.

An example of the present disclosure provides a packet forwarding apparatus, which is applied to a node a ring network, the method including:
a receiving unit, to receive a packet;
a processing unit, to find a forwarding table entry for forwarding the packet in a local forwarding table, where the forwarding table entry includes a primary out-going interface identifier and a backup out-going interface identifier, the primary out-going interface identifier indicates a first ring network interface at the node, the backup out-going interface identifier indicates a second ring network interface at the node, the first ring network interface and the second ring network interface both are enabled with ring network protection function, and the first ring network interface is different from the second ring network interface; and forward, in response to determining that an in-coming interface receiving the packet is the first ring network interface indicated by the primary out-going interface identifier, the packet through the second ring network interface indicated by the backup out-going interface identifier.

An example of the present disclosure provides an electronic device, which includes a processor and a machine-readable storage medium; The machine-readable storage medium stores computer instructions which, when executed by the processor, perform the blocks in the above method.

As can be seen from the above technical solution, in the present disclosure, each node in the ring network enables the ring network protection function for the local ring network interface, so that when a node determines that an out-going interface of a route to the destination node is the local ring network interface enabled with the ring network protection function, the route is regarded as the primary route from the node to the destination node, and determines a backup route of the primary route (an out-going interface of the backup route is a ring network interface enabled with the ring network protection function at the node). Then the packet may be forwarded based on the primary and backup routes. For example, after receiving the packet, if the in-coming interface receiving the packet is the same as the primary out-going interface of the primary route, the packet may be forwarded directly through the backup out-going interface of the backup route. This avoids a packet forwarding loop caused by a node on the ring network receiving a packet before the route has converged when anomalies occur on the ring network, such as a node failure or a link failure between any two nodes, thereby improving packet forwarding efficiency.

### BRIEF DESCRIPTION OF DRAWINGS

The accompanying drawings, which are incorporated in and constitute a part of the specification, illustrate examples consistent with the present disclosure, and are used together with the specification to explain the principles of the present disclosure.
FIGS. 1 to 3 are schematic diagrams of existing networking.
FIG. 4 is a schematic diagram of a multi-ring network according to an example of the present disclosure.
FIG. 5 is a schematic diagram of primary and backup routes in a single ring network according to an example of the present disclosure.
FIG. 6 is a schematic diagram of primary and backup routes in a multi-ring network according to an example of the present disclosure.
FIG. 7 is a flowchart of a method according to an example of the present disclosure.
FIG. 8 is an application networking diagram according to an example of the present disclosure.
FIG. 9 is an application networking diagram according to another example of the present disclosure.
FIG. 10 is a schematic structural diagram of an apparatus according to an example of the present disclosure.
FIG. 11 is a hardware structure diagram of the apparatus shown in FIG. 10 according to an example of the present disclosure.

### DETAILED DESCRIPTION

Reference will now be made in detail to exemplary examples, examples of which are illustrated in the accompanying drawings. When the following description refers to the accompanying drawings, unless otherwise indicated, the same numbers in different accompanying drawings indicate the same or similar elements. Examples described in the following exemplary examples do not represent all examples consistent with the present disclosure. Rather, they are merely examples of apparatuses and methods consistent with some aspects of the present disclosure as detailed in the appended claims.

Terms used in the present disclosure are only for a purpose of describing specific examples, and are not limiting the present disclosure. Singular forms of "a," said," and "the" used in the present disclosure and in the appended claims are also intended to include majority forms, unless the context clearly indicates otherwise.

In order to make those skilled in the art better understand technical solutions provided by the examples of the present disclosure, and make the above objects, features and advantages of the examples of the present disclosure more apparent and easier to understand, the technical solutions in the examples of the present disclosure will be further described in detail below with reference to the accompanying drawings.

In this example, each node on the ring network will enable ring network protection function for interfaces (referred to as ring network interfaces) locally connecting to other nodes on the ring network. In some examples, this example may input a command line to a configuration interface of each node on the ring network, so that each node on the ring network will enable the ring network protection function for the ring network interfaces locally connecting to other nodes on the ring network.

It should be noted that if the same node is on at least two different ring networks, such as node E in FIG. 4, which is on two different ring networks (denoted as Ring1 and Ring2 respectively), ring network interfaces of the node E locally connecting to each ring network are enabled with the ring network protection function. Node D is similar and will not be repeated.

In this example, each node on the ring network calculates an optimal route (recorded as a first optimal route) from the node to a destination node (such as a destination node or a destination network segment) according to the shortest path first algorithm. In some examples, the destination node here may be set according to actual needs, and this example is not specifically limited.

As an example, when the first optimal route calculated by the above node includes an out-going interface that is a local ring network interface enabled with the ring network protection function (e.g., recorded as a first ring network interface), at this time, the node may record the route as a primary route from the node to the above destination node. At this time, the first ring network interface is the primary out-going interface included in the primary route.

In some examples, in this example, based on the ring network protection function that the first ring network interface has been enabled, the node will select an optimal route (recorded as a second optimal route) from remaining routes except the primary route from the node to the destination node according to the shortest path first algorithm.

It should be noted that the primary route here may include: an out-going interface (also named as a primary out-going interface) and/or a next-hop node (also named as a primary next-hop node). Taking the primary route including at least a primary next-hop node as an example, correspondingly, the aforementioned remaining routes refer to other routes excluding a link from the node to the primary next-hop node. Taking the primary route including at least a primary out-going interface as another example, correspondingly, the aforementioned remaining routes refer to other routes excluding a link connected to the primary out-going interface.

If the out-going interface included in the second optimal route is a ring network interface at the node that has enabled ring network protection function (different from the first ring network interface, and may be recorded as a second ring network interface), then this second optimal route is taken as a backup route for the primary route. Correspondingly, the second ring network interface serves as a backup out-going interface included in the backup route.

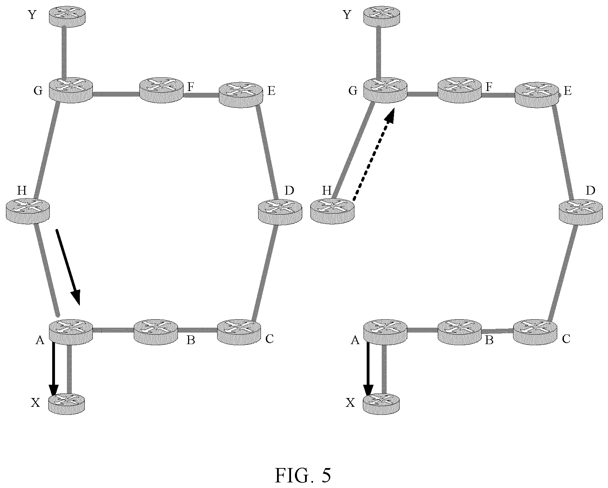

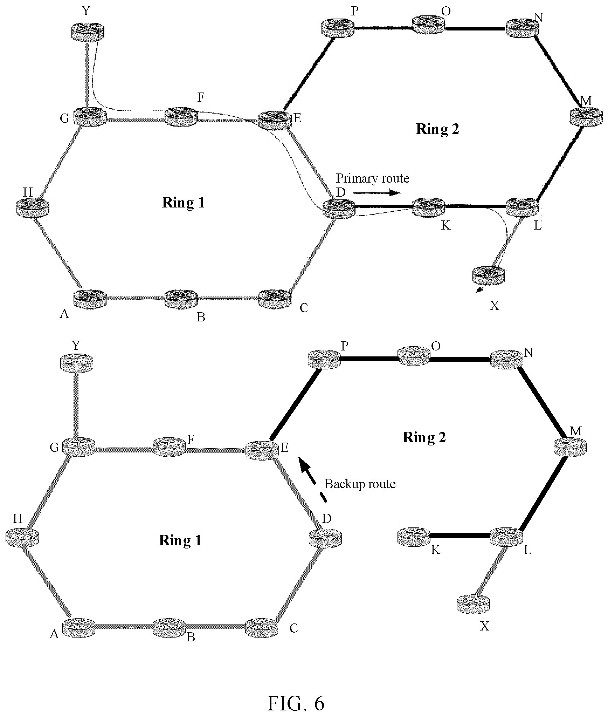

Taking the networking shown in FIG. 1 as an example, assuming that the destination node is Node X, FIG. 5 shows an example of the primary route (indicated by solid lines in FIG. 5) and the backup route (indicated by dashed lines in FIG. 5) from Node H to Node X. If the destination node is node X, FIG. 6 shows a schematic diagram of primary and backup routes determined by node D in two ring networks (the solid line indicates the primary route and the dashed line indicates the backup route).

As an example, the present example may first record a topological relationship between nodes in the networking by means of a link state database. Here, the topological relationship recorded in the link state database is learned based on link state routing protocols such as open shortest path first (OSPF) protocol. Based on this, a node in the ring network may determine the primary route and backup route from the node to the destination node based on the topological relationships recorded in the link state database and according to the shortest path first algorithm. For example, the node determines the primary route from the node to the destination node from all topological relationships recorded in the link state database according to the shortest path first algorithm. As an example, the primary route from the node to the destination node may include an out-going interface (also named as a primary out-going interface) and/or a next-hop node (also named as a primary next-hop node) at the node.

Taking the primary route including at least a primary next-hop node as an example, correspondingly, a backup route from the node to the destination node determined by the node is determined according to the shortest path first algorithm from remaining topological relationships recorded in the link state database, excluding a link from the node to the primary next-hop node. Or, taking the primary route including at least a primary out-going interface as another example, a backup route from the node to the destination node determined by the node is determined according to the shortest path first algorithm from remaining topological relationships recorded in the link state database, excluding a link connected to the primary out-going interface at the node.

As an example, when a node in the ring network determines the primary route and the backup route from the node to the destination node, the node will add corresponding forwarding table entries in a local forwarding table, such as a forwarding information base (FIB) table. In some examples, the forwarding table entry contains at least an identifier of a primary out-going interface (referred to as a primary out-going interface identifier) and an identifier of a backup out-going interface (referred to as a backup out-going interface identifier). The primary out-going interface identifier indicates a first ring network interface at the node, the backup out-going interface identifier indicates a second ring network interface at the node, and the first ring network interface and the second ring network interface both are enabled with ring network protection function.

It should be noted that if an out-going interface of a second optimal route selected from the remaining routes other than the primary route according to the shortest path first algorithm is not any ring network interface at the node that has enabled ring network protection function, alarm information may be output to indicate that the ring network currently has an abnormality, such as "ring network abnormality, a reason for the abnormality is a failure of a reverse protection route calculation for the ring network."

Based on the above description, the following describes a packet forwarding method for a ring network provided by an example of the present disclosure.

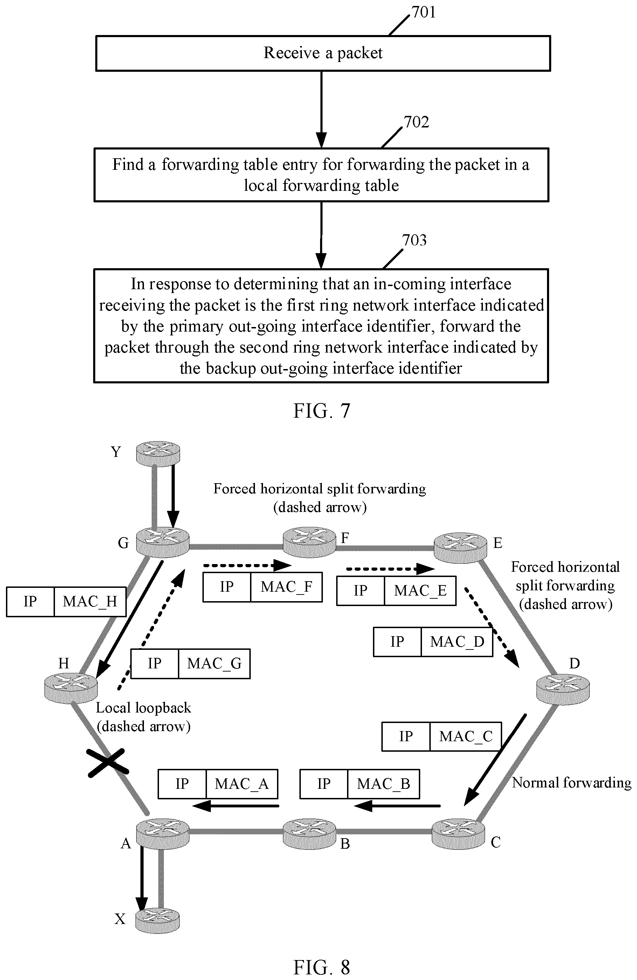

Referring to FIG. 7, FIG. 7 is a flowchart of a method according to an example of the present disclosure. This process may be performed by a node in a ring network.

As shown in FIG. 7, the process may include the following blocks.

At block 701, a packet is received.

At block 702, a forwarding table entry for forwarding the packet is found in a local forwarding table.

In some examples, if the packet here refers to a packet sent to a destination node, the forwarding table entry for forwarding the packet may be found in the local forwarding table based on a destination address of the packet (indicating the destination node). As described above, the forwarding table entry includes a primary out-going interface identifier and a backup out-going interface identifier. The primary out-going interface identifier indicates a first ring network interface at the node, the backup out-going interface identifier indicates a second ring network interface at the node, and the first ring network interface and the second ring network interface both are enabled with ring network protection function.

At block 703, in response to determining that an in-coming interface receiving the packet is the first ring network interface indicated by the primary out-going interface identifier, the packet is forwarded through the second ring network interface indicated by the backup out-going interface identifier.

In response to determining that the in-coming interface receiving the packet is different from the first ring network interface indicated by the primary out-going interface identifier and the primary route is currently reachable, the packet is forwarded through the first ring network interface indicated by the primary out-going interface identifier. Here, whether the primary route is reachable may be implemented based on existing route reachability detection mechanisms, and this example does not specifically limit it.

And in response to determining that the in-coming interface receiving the packet is different from the first ring network interface indicated by the primary out-going interface identifier and the primary route is currently unreachable, the packet is forwarded through the second ring network interface indicated by the backup out-going interface identifier. Here, the primary route is unreachable, e.g., the route is unreachable caused by an abnormality of the first ring network interface, an abnormality of a link connected with the first ring network interface, or an abnormality of the primary next-hop node, and this example does not specifically limit it.

At this point, the process shown in FIG. 7 is completed.

From the process shown in FIG. 7, it can be seen that in this example, each node in the ring network enables the ring network protection function for the local ring network interface, so that when a node determines that an out-going interface of a route to the destination node is the local ring network interface enabled with the ring network protection function, the route is regarded as the primary route from the node to the destination node, and determines a backup route of the primary route (an out-going interface of the backup route is a ring network interface enabled with the ring network protection function at the node). Then the packet may be forwarded based on the primary and backup routes. For example, after receiving the packet, if the in-coming interface receiving the packet is the same as the primary out-going interface of the primary route, the packet may be forwarded directly through the backup out-going interface of the backup route. This avoids a packet forwarding loop caused by a node on the ring network receiving a packet before the route has successfully adjusted when anomalies occur on the ring network, such as a node failure or a link failure between any two nodes, thereby improving packet forwarding efficiency.

The following describes the above process through a specific example.

The packet applied in this example may be a packet carrying an underlay encapsulation (referred to as an underlay packet), such as an underlay packet sent from node Y to node X shown in FIG. 1. The packet applied in this example may also be a packet carrying an overlay encapsulation (referred to as an overlay packet), such as an overlay packet sent from node Z to node W shown in FIG. 1. It should be noted that a node where the overlay packet enters the ring network (referred to as an ingress node) such as node E shown in FIG. 1, will add underlay encapsulation to the overlay packet after receiving the overlay packet. A node where the overlay packet leaves the ring network (referred to as an egress node) such as node C shown in FIG. 1, will remove the added underlay encapsulation after receiving the overlay packet. The newly added underlay encapsulation may include a Virtual Extensible Local Area Network (VXLAN) header, an outer User Datagram Protocol (UDP) header, and an outer IP header. A destination IP address of the outer IP header is an IP address of the egress node where the overlay packet leaves the ring network (referred to as an egress node). In some examples, the underlay encapsulation may also be a Segment Routing Ipv6 (SRv6) header and an outer IPv6 header. A destination IP address of the outer IPv6 header is a Segment Identifier (SID) of the egress node C.

Based on the above description, as shown in FIG. 8, node G in the ring network receives a packet from node Y, such as a packet carrying the underlay encapsulation.

Node G queries a local FIB forwarding table to obtain a forwarding table entry for forwarding the packet.

When the primary route used for forwarding the packet is currently reachable, node G forwards the packet through an interface indicated by a primary out-going interface identifier in the forwarding table entry, which is an interface on node G connecting to node H. As shown in FIG. 8, a destination MAC in an Ethernet header of the packet is an MAC address MAC_H of node H.

Node H receives the packet and queries the local FIB forwarding table to obtain the forwarding table entry for forwarding the packet.

Node H finds that the primary route used for forwarding the packet is currently unreachable (due to factors such as a failure of the primary out-going interface, a link failure to a next-hop node, or a failure of a next-hop node), and node H forwards the packet through an interface corresponding to a backup out-going interface identifier in the forwarding table entry, which is an interface on node H connecting to node G. As shown in FIG. 8, a destination MAC in an Ethernet header of the packet is an MAC address MAC_G of node G. Combined with the above forwarding, the packet here essentially enters a loopback stage, and the packet at this time may be named as a loopback packet.

Node G receives the packet and queries the local FIB forwarding table to obtain the forwarding table entry for forwarding the packet.

Node G finds that the interface indicated by the primary out-going interface identifier in the forwarding table entry is the same as an interface that receives the packet, and the node G forwards the packet through the interface indicated by a backup out-going interface identifier in the forwarding table entry, which is an interface on node G connecting to node F. As shown in FIG. 8, a destination MAC in an Ethernet header of the packet is an MAC address MAC_F of node F.

In the above description, when node G finds that the interface indicated by the primary out-going interface identifier in the forwarding table entry is the same as the interface that receives the packet, the node G forwards the packet through the interface indicated by the backup out-going interface identifier in the forwarding table entry, which is the interface on node G connecting to node F. This forwarding method may be named as forced horizontal split forwarding.

By forced horizontal split forwarding, when the primary route is unreachable due to abnormal ring network, such as node failure or abnormal link between any two nodes, a packet forwarding loop caused by different time differences of converging routes among nodes in the ring network can be prevented. For example, node G performs route convergence when node G detects a link failure between node H and node A. At this time, node G has already adjusted an out-going interface included in the primary routing for routing to node X (i.e., the primary out-going interface) to be an interface on node G that connects to node F, while node F has not yet adjusted its primary routing to node X, for example, at this moment, an out-going interface included in the primary routing (i.e., the primary out-going interface) is still an interface on node F that connects to node G. By following the forced horizontal split forwarding method, it is possible to avoid a forwarding loop of a packet (packet to node X) between node G and node F.

After receiving the packet, node F and node E will query the local FIB forwarding table to obtain the forwarding table entry for forwarding the packet. If the interface indicated by the primary out-going interface identifier in the forwarding table entry is found to be the same as the interface receiving the packet, the packet is forwarded through the interface indicated by the backup out-going interface identifier in the forwarding table entry according to the processing method similar to that of node G, as shown in FIG. 8.

Node D receives the packet and queries the local FIB forwarding table to obtain the forwarding table entry for forwarding the packet. Node D finds that the interface indicated by the primary out-going interface identifier in the forwarding table entry is different from the interface receiving the packet, and the primary route is currently reachable, then node D forwards the packet through the interface indicated by the primary out-going interface identifier in the forwarding table entry, i.e., the interface on node D that connects to node C (which may be named as normal forwarding at this time). Node C and node B are handled similarly to node D. Finally, the underlay packet from node Y will be forwarded to node X.

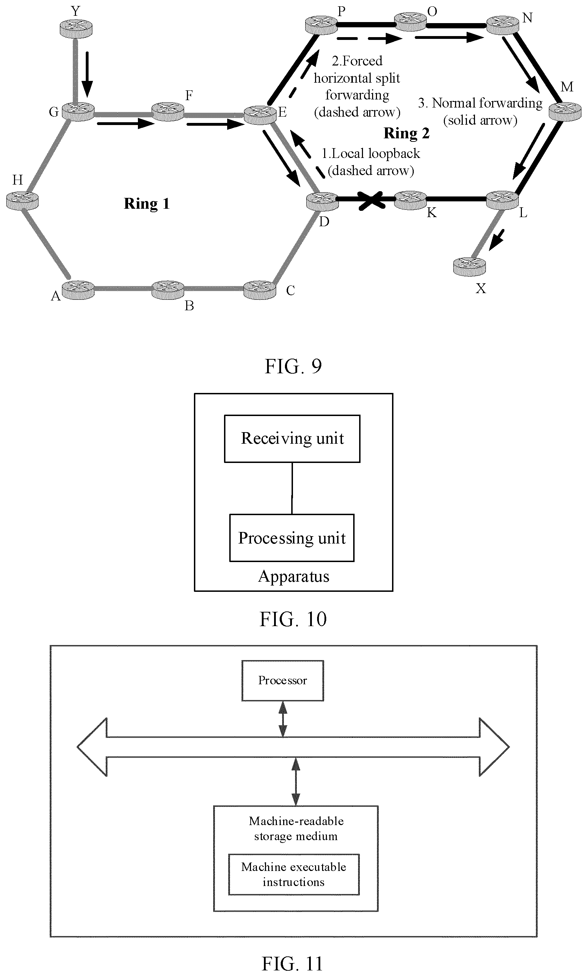

By the same principle, for a multi-ring network, as shown in FIG. 9, the packet forwarding loop may also be avoided according to the forced horizontal split forwarding. For example, in FIG. 9, after receiving the packet, Node D will query the local FIB forwarding table to obtain the forwarding table entry for forwarding the packet. If the node D finds that the primary route is currently unreachable, the node D forwards the packet through the interface indicated by the backup out-going interface identifier in the forwarding table entry, which is an interface on node D connecting to node E. After receiving the packet, node E will query the local FIB forwarding table to obtain the forwarding table entry for forwarding the packet. If it is found that interface indicated by the primary out-going interface identifier in the forwarding table entry is the same as an interface that receives the packet, the packet is forwarded through the interface indicated by the backup out-going interface identifier in the forwarding table entry based on the forced horizontal split forwarding. Similar to node P and node O, node P and node O will forward the packet through the interface indicated by the backup out-going interface identifier in the forwarding table entry based on the forced horizontal split forwarding. Node N, node M, and node L forward the packet in a manner similar to the normal forwarding described above. Finally, the underlay packet from node Y will be forwarded to node X.

By following the method described above, ring network protection can be achieved, enabling fast recovery within 10 milliseconds through software such as central processing units (CPUs) when the ring network is abnormal, and sub-millisecond, hundred-microsecond, or faster recovery through hardware such as hardware forwarding chips. This meets the ring protection requirements of ring networks. This method is applicable to both pure IPv4 and IPv6, and does not rely on technically complex technologies such as MPLS SR and SRv6, as well as TI-LFA. It is simple to implement and has strong applicability. It is also easy to implement on network devices that have difficulty supporting complex technologies such as MPLS SR TI-LFA and SRv6 TI-LFA but desire fast ring switching capabilities. At the same time, it avoids the deployment and operational complexity of TI-LFA technology.

The method provided by the examples of the present disclosure has been described above. The apparatus provided by examples of the present disclosure is described below.

Referring to FIG. 10, FIG. 10 is a structural diagram of an apparatus according to an example of present disclosure. The apparatus is applied to a node in the ring network, as shown in FIG. 10, and includes a receiving unit and a processing unit.

The receiving unit is to receive a packet.

The processing unit is to find a forwarding table entry for forwarding the packet in a local forwarding table, where the forwarding table entry includes a primary out-going interface identifier and a backup out-going interface identifier, the primary out-going interface identifier indicates a first ring network interface at the node, the backup out-going interface identifier indicates a second ring network interface at the node, and the first ring network interface and the second ring network interface both are enabled with the ring network protection function, and the first ring network interface is different from the second ring network interface; and
in response to determining that an in-coming interface receiving the packet is the first ring network interface indicated by the primary out-going interface identifier, forward the packet through the second ring network interface indicated by the backup out-going interface identifier.

In some examples, the processing unit is further to: enable the ring network protection function for a local ring network interface; determine, according to a shortest path first algorithm, a first optimal route from the node to a destination node; in response to determining that an out-going interface included in the first optimal route is a first ring network interface at the node enabled with the ring network protection function, take the first optimal route as a primary route from the node to the destination node and take the first ring network interface as a primary out-going interface included in the primary route; select, from remaining routes from the node to the destination node other than the primary route and according to the shortest path first algorithm, a second optimal route; in response to determining that an out-going interface included in the second optimal route is a second ring network interface at the node enabled with the ring network protection function, take the second optimal route as a backup route for the primary route and take the second ring network interface as a backup out-going interface included in the backup route; and record a forwarding table entry in the local forwarding table, where the forwarding table entry includes at least an identifier of the primary out-going interface and an identifier of the backup out-going interface.

In some examples, determine, according to a shortest path first algorithm, a first optimal route from the node to a destination node specifically includes: determine, based on a topological relationship between networking nodes recorded in a link state database and according to the shortest path first algorithm, the first optimal route;
where select, from remaining routes from the node to the destination node other than the primary route and according to the shortest path first algorithm, a second optimal route specifically includes: determine, based on remaining topological relationships recorded in the link state database and according to the shortest path first algorithm, the second optimal route;
where the remaining topological relationships indicate topological relationships in the link state database excluding a link connected to the primary out-going interface included in the primary route.

In response to determining that the out-going interface of the second optimal route is different from any ring network interface at the node enabled with ring network protection function, the processing unit is further to: output alarm information to indicate that the ring network is currently abnormal.

In some examples, the primary out-going interface identifier indicates a primary out-going interface included in a primary route for forwarding the packet; in response to determining that the in-coming interface receiving the packet is different from the first ring network interface indicated by the primary out-going interface identifier and the primary route is currently reachable, the processing unit is further to: forward the packet through the first ring network interface indicated by the primary out-going interface identifier.

In some examples, the primary out-going interface identifier indicates a primary out-going interface included in a primary route for forwarding the packet, and the backup out-going interface identifier indicates a primary out-going interface included in a backup route for forwarding the packet; in response to determining that the in-coming interface receiving the packet is different from the first ring network interface indicated by the primary out-going interface identifier and the primary route is currently unreachable, the processing unit is further to: forward the packet through the second ring network interface indicated by the backup out-going interface identifier.

At this point, the structural description of the apparatus shown in FIG. 10 is completed.

An example of the present disclosure further provides a description of a hardware structure of the apparatus shown in FIG. 10. As shown in FIG. 11, the hardware structure may include: a processor, and a machine-readable storage medium.

The machine-readable storage medium stores computer instructions which, when executed by the processor, perform the blocks in the above method.

Based on the same application concept as the above method, an example of the present disclosure further provides a machine-readable storage medium, the machine-readable storage medium having stored thereon a number of computer instructions, the computer instructions, when executed by a processor, being capable of realizing the method disclosed in the above example of the present disclosure.

For example, the machine-readable storage medium may be any electronic, magnetic, optical or other physical storage apparatus, and may contain or store information, such as executable instructions, packets, and the like. For example, the machine-readable storage medium may be: a random access memory (RAM), a volatile memory, a non-volatile memory, a flash memory, a storage drive (e.g., a hard disk drive), a solid state drive, any type of storage disk (e.g., an optical disk, a dvd, etc.), or the like, or a combination thereof.

For the convenience of description, when describing the above apparatus, the functions are divided into various units and described separately. The functions of each unit may be implemented in the same or multiple software and/or hardware when the present disclosure is implemented.

It should be understood by those skilled in the art that examples of the present disclosure may be provided as a method, a system, or a computer program product. Therefore, the present disclosure may take the form of an entirely hardware example, an entirely software example, or an example combining software and hardware aspects. Moreover, examples of the present disclosure may take the form of a computer program product implemented on one or more computer-usable storage media (including but not limited to disk storage, CD-ROM, optical storage, etc.) containing computer-usable program codes.

The present disclosure is described with reference to flowcharts and/or block diagrams of methods, devices (systems), and computer program products according to the examples of the present disclosure. It should be understood that each flow and/or block in the flowcharts and/or block diagrams, and combinations of the flow and/or block in the flowcharts and/or block diagrams may be implemented by computer program instructions. These computer program instructions may be provided to a processor of a general-purpose computer, a special-purpose computer, an embedded processor or other programmable packet processing device to produce a machine, such that instructions which are executed by a processor of the computer or other programmable packet processing device produce an apparatus for implementing the functions specified in one or more flows of the flowcharts and/or one or more blocks of the block diagrams.

Moreover, these computer program instructions may also be stored in a computer-readable memory that may direct a computer or other programmable packet processing device to function in a particular manner, such that the instructions stored in the computer-readable memory produce an article of manufacture including an instruction apparatus that implements the functions specified in one or more flows of the flowcharts and/or one or more blocks of the block diagrams.

These computer program instructions may also be loaded onto a computer or other programmable packet processing devices, such that a series of operational blocks are performed on the computer or other programmable devices to produce a computer-implemented process, such that the instructions executed on the computer or other programmable devices provides blocks for implementing the functions specified in one or more flows of the flowcharts and/or one or more blocks of the block diagrams.

The above is only examples of the present disclosure and is not intended to limit the present disclosure. Various modifications and variations of the present disclosure will occur to those skilled in the art. Any modifications, equivalent substitutions, improvements, etc. made within the spirit and principle of the present disclosure should be included in the scope of the claims of the present disclosure.

## Claims

1. A packet forwarding method, performed by a node in a ring network, comprising:
receiving a packet;
finding a forwarding table entry for forwarding the packet in a local forwarding table, wherein the forwarding table entry comprises a primary out-going interface identifier and a backup out-going interface identifier, the primary out-going interface identifier indicates a first ring network interface at the node, the backup out-going interface identifier indicates a second ring network interface at the node, the first ring network interface and the second ring network interface both are enabled with ring network protection function, and the first ring network interface is different from the second ring network interface; and
forwarding, in response to determining that an in-coming interface receiving the packet is the first ring network interface indicated by the primary out-going interface identifier, the packet through the second ring network interface indicated by the backup out-going interface identifier.

2. The method according to claim 1, wherein before receiving the packet, the method further comprises:
enabling the ring network protection function for a local ring network interface;
determining, according to a shortest path first algorithm, a first optimal route from the node to a destination node;
taking, in response to determining that an out-going interface comprised in the first optimal route is a first ring network interface at the node enabled with the ring network protection function, the first optimal route as a primary route from the node to the destination node, and taking the first ring network interface as a primary out-going interface comprised in the primary route;
selecting, from remaining routes from the node to the destination node other than the primary route and according to the shortest path first algorithm, a second optimal route;
taking, in response to determining that an out-going interface comprised in the second optimal route is a second ring network interface at the node enabled with the ring network protection function, the second optimal route as a backup route for the primary route and taking the second ring network interface as a backup out-going interface comprised in the backup route; and
recording a forwarding table entry in the local forwarding table, wherein the forwarding table entry comprises at least an identifier of the primary out-going interface and an identifier of the backup out-going interface.

3. The method according to claim 2,
wherein determining, according to a shortest path first algorithm, a first optimal route from the node to a destination node specifically comprises:
determining, based on a topological relationship between networking nodes recorded in a link state database and according to the shortest path first algorithm, the first optimal route;
wherein selecting, from remaining routes from the node to the destination node other than the primary route and according to the shortest path first algorithm, a second optimal route specifically comprises:
determining, based on remaining topological relationships recorded in the link state database and according to the shortest path first algorithm, the second optimal route;
wherein the remaining topological relationships indicate topological relationships in the link state database excluding a link connected to the primary out-going interface comprised in the primary route.

4. The method according to claim 2, further comprising:
outputting, in response to determining that the out-going interface of the second optimal route is different from any ring network interface at the node enabled with ring network protection function, alarm information to indicate that the ring network is currently abnormal.

5. The method according to claim 1, wherein the primary out-going interface identifier indicates a primary out-going interface comprised in a primary route for forwarding the packet, and the method further comprises:
forwarding, in response to determining that the in-coming interface receiving the packet is different from the first ring network interface indicated by the primary out-going interface identifier and the primary route is currently reachable, the packet through the first ring network interface indicated by the primary out-going interface identifier.

6. The method according to claim 1, wherein the primary out-going interface identifier indicates a primary out-going interface comprised in a primary route for forwarding the packet, the backup out-going interface identifier indicates a primary out-going interface comprised in a backup route for forwarding the packet, and the method further comprises:
forwarding, in response to determining that the in-coming interface receiving the packet is different from the first ring network interface indicated by the primary out-going interface identifier and the primary route is currently unreachable, the packet through the second ring network interface indicated by the backup out-going interface identifier.

7. A packet forwarding apparatus, applied to a node in a ring network, comprising:
a receiving unit, to receive a packet;
a processing unit, to find a forwarding table entry for forwarding the packet in a local forwarding table, wherein the forwarding table entry comprises a primary out-going interface identifier and a backup out-going interface identifier, the primary out-going interface identifier indicates a first ring network interface at the node, the backup out-going interface identifier indicates a second ring network interface at the node, the first ring network interface and the second ring network interface both are enabled with ring network protection function, and the first ring network interface is different from the second ring network interface; and
forward, in response to determining that an in-coming interface receiving the packet is the first ring network interface indicated by the primary out-going interface identifier, the packet through the second ring network interface indicated by the backup out-going interface identifier.

8. The apparatus according to claim 7, wherein the processing unit is further to:
enable the ring network protection function for a local ring network interface;
determine, according to a shortest path first algorithm, a first optimal route from the node to a destination node;
take, in response to determining that an out-going interface comprised in the first optimal route is a first ring network interface at the node enabled with the ring network protection function, the first optimal route as a primary route from the node to the destination node, and take the first ring network interface as a primary out-going interface comprised in the primary route;
select, from remaining routes from the node to the destination node other than the primary route and according to the shortest path first algorithm, a second optimal route;
take, in response to determining that an out-going interface comprised in the second optimal route is a second ring network interface at the node enabled with the ring network protection function, the second optimal route as a backup route for the primary route, and take the second ring network interface as a backup out-going interface comprised in the backup route; and
record a forwarding table entry in the local forwarding table, wherein the forwarding table entry comprises at least an identifier of the primary out-going interface and an identifier of the backup out-going interface.

9. The apparatus according to claim 8, wherein determine, according to a shortest path first algorithm, a first optimal route from the node to a destination node specifically comprises:
determine, based on a topological relationship between networking nodes recorded in a link state database and according to the shortest path first algorithm, the first optimal route;
wherein select, from the node to the destination node other than the primary route and according to the shortest path first algorithm, a second optimal route specifically comprises:
determine, based on remaining topological relationships recorded in the link state database and according to the shortest path first algorithm, the second optimal route;
wherein the remaining topological relationships indicate topological relationships in the link state database excluding a link connected to the primary out-going interface comprised in the primary route.

10. The apparatus according to claim 8, in response to determining that the out-going interface of the second optimal route is different from any ring network interface at the node enabled with ring network protection function, the processing unit is further to:
output alarm information to indicate that the ring network is currently abnormal.

11. The apparatus according to claim 7, wherein the primary out-going interface identifier indicates a primary out-going interface comprised in a primary route for forwarding the packet;
in response to determining that the in-coming interface receiving the packet is different from the first ring network interface indicated by the primary out-going interface identifier and the primary route is currently reachable, the processing unit is further to:
forward the packet through the first ring network interface indicated by the primary out-going interface identifier.

12. The apparatus according to claim 7, wherein the primary out-going interface identifier indicates a primary out-going interface comprised in a primary route for forwarding the packet, and the backup out-going interface identifier indicates a primary out-going interface comprised in a backup route for forwarding the packet;
in response to determining that the in-coming interface receiving the packet is different from the first ring network interface indicated by the primary out-going interface identifier and the primary route is currently unreachable, the processing unit is further to:
forward the packet through the second ring network interface indicated by the backup out-going interface identifier.

13. An electronic device, comprising:
a processor and a machine-readable storage medium; and
the machine-readable storage medium stores computer instructions which, when executed by the processor, perform blocks of the method according to any one of claims 1 to 6.
